# EUROPÄISCHE PATENTSCHRIFT

(11) **EP 2 909 524 B1**
(45) Veröffentlichungstag und Bekanntmachung des Hinweises auf die Patenterteilung: **02.11.2016**
(21) Anmeldenummer: 13770864.0
(22) Anmeldetag: 19.09.2013
(51) Int. Cl.: F17C 5/06

(54) **VERFAHREN ZUM BEFÜLLEN EINER KRAFTSTOFFSPEICHERANLAGE EINES KRAFTFAHRZEUGS**
METHOD FOR FILLING A FUEL STORAGE SYSTEM OF A MOTOR VEHICLE
PROCÉDÉ DE REMPLISSAGE D'UN SYSTÈME DE STOCKAGE DE CARBURANT D'UN VÉHICULE AUTOMOBILE

(30) Priorität: 16.10.2012 DE 102012218857
(43) Veröffentlichungstag der Anmeldung: 26.08.2015
(73) Patentinhaber: Bayerische Motoren Werke Aktiengesellschaft, 80809 München (DE)
(72) Erfinder: KUNZE, Klaas, 80639 Muenchen (DE); PELGER, Andreas, 85737 Ismaning (DE); SZOUCSEK, Klaus, 85778 Haimhausen (DE)
(86) Internationale Anmeldenummer: PCT/EP2013/069500
(87) Internationale Veröffentlichungsnummer: WO 2014/060179

(56) Entgegenhaltungen:
- EP-A1- 1 800 930
- DE-A1- 10 021 681
- DE-A1- 10 330 308
- DE-A1-102008 053 463
- DE-A1-102008 060 127
- US-A1- 2012 216 910

## Beschreibung

Die Erfindung betrifft ein Verfahren zum Befüllen einer Kraftstoffspeicheranlage eines Kraftfahrzeugs mit unter höherem Druck stehenden Kraftstoff, wobei die Kraftstoffspeicheranlage einen über eine Haupt-Befüllleitung bis zum Erreichen eines Grenzdrucks befüllbaren Haupt-Tank und einen Hilfsspeicher aufweist, nach dem Oberbegriff des Anspruchs 1. Ausdrücklich nur vorzugsweise handelt es sich bei dem Kraftstoff um Wasserstoff und es wird zum Stand der Technik neben der DE 10 2008 060 127 A1 und der DE 100 21 681 C2 auf die EP 1 800 930 A1 verwiesen.

Die Speichertechnologie für Wasserstoff in Kraftfahrzeugen befindet sich derzeit in umfangreicher Weiterentwicklung, da Wasserstoff als künftige Alternative zu aus Erdöl gewonnenen Kraftstoffen für die Antriebsaggregate von Kraftfahrzeugen betrachtet wird. Neben der Speicherung von Flüssig-Wasserstoff in kryogenem Zustand wird die Druckspeicherung von gasförmigen Wasserstoff sowie quasi als Kombination hiervor die Kryodruckspeicherung von tiefkaltem Wasserstoff in überkritischem Zustand weiterentwickelt. Für die Druckspeicherung von gasförmigem Wasserstoff (praktisch unter Umgebungstemperatur) sind derzeit Druckwerte in der Größenordnung von 600 bar - 700 bar vorgesehen, mit denen seitens einer Tankstelle bzw. allgemein einer Versorgungsstation gasförmiger Wasserstoff angeboten wird, während für die letztgenannte Kryodruckspeicherung ein demgegenüber niedrigeres Druckniveau in der Größenordnung von 300 bar vorgesehen ist. Als Stand der Technik kann hierzu kann auch die eingangs genannte DE 10 2008 060 127 A1 genannt werden.

In der eingangs weiterhin genannten DE 100 21 681 C2 ist ein Energiespeichersystem zum Speichern von insbesondere kryogenem Wasserstoff beschrieben, welches neben einem vorliegend sog. Haupt-Tank einen vorliegend sog. Hilfsspeicher aufweist. In diesem Hilfsspeicher wird Wasserstoff gespeichert, welcher aus dem als Kryo-Tank ausgebildeten Haupt-Tank abgeblasen werden muss, um einen unzulässig hohen Druckaufbau im Haupt-Tank zu verhindern, welcher Druckaufbau durch eine Erwärmung des in diesem enthaltenen Wasserstoffs aufgrund eines unvermeidbaren geringfügigen Wärmeeintrags aus der Umgebung in den Tank verursacht wird.

Schließlich beschreibt die zur Bildung des Oberbegriffs des Anspruchs 1 herangezogene EP 1 800 930 A1 ein Verfahren zum Befüllen einer Kraftstoffspeicheranlage eines Kraftfahrzeugs mit mehreren Speicherbehältern, wobei zunächst derjenige mit dem geringsten Restdruck (im Behälter) befüllt wird und danach derjenige mit dem zweitniedrigsten Restdruck und so weiter.

Gegenüber der reinen Druckspeicherung besitzt die Kryodruck-Speicherung den Vorteil, dass größere Mengen von Wasserstoff bzw. allgemein einem Speichermedium (bzw. Kraftstoff) unter geringerem Druck gespeichert werden können, was insbesondere hinsichtlich des Gewichts des Haupt-Tanks (und damit auch des Gewichts eines damit ausgerüsteten Kraftfahrzeugs) günstig ist. Gegenüber der reinen Kryo-Speicherung hat die Kryodruck-Speicherung den Vorteil einer signifikant geringeren aus einem unvermeidbaren Wärmeeintrag resultierenden Abblasemenge. Vorteilhafterweise kann ein mit einem Kryodrucktank als Haupt-Tank ausgerüstetes Kraftfahrzeug nicht nur mit kryogenem Wasserstoff in überkritischem Zustand betankt werden, sondern es kann dann, falls kein kryogener Wasserstoff zur Verfügung steht, auch gasförmiger Wasserstoff in den Haupt-Tank gefüllt werden.

Allerdings ist bei der Befüllung eines Haupt-Tanks, der wie im Falle der bis heute entwickelten Technologie für Kryodruck-Tanks nur bis zu einem gewissen Grenzdruck - heute bspw. in der Größenordnung von 300 bar - befüllt werden kann, dann, wenn diese Befüllung an einer Tankstelle oder dgl. (allgemein: Versorgungsstation) durchgeführt wird, welche gasförmigen Wasserstoff (bzw. allg. Kraftstoff) unter einem demgegenüber höheren Druckniveau von bspw. 600 bar anbietet, darauf zu achten, dass im Haupt-Tank kein den besagten Grenzdruck überschreitender Druck entsteht. Dies kann grundsätzlich relativ einfach dadurch gewährleistet werden, dass in einer im Kraftfahrzeug vorgesehenen und zum Haupt-Tank führenden Befüll-Leitung, deren dem Haupt-Tank gegenüber liegendes Ende mit der den gasförmigen Wasserstoff (unter einem derart hohen Druckniveau) bereit stellenden Tankstelle oder dgl. verbunden ist und in der ein hier sog. Tankabsperrventil vorgesehen ist, dieses Tankabsperrventil vorzugsweise gesteuert durch eine elektronische Steuereinheit dann geschlossen wird, sobald im Haupt-Tank mittels eines Druckmessfühlers ein Druck nahe des genannten bzw. dessen Grenzdrucks festgestellt wird.

Allerdings kann das relativ schlagartige Schließen eines solchen Tankabsperrventils weit unterhalb des von der Tankstelle bzw. Versorgungsstation bereit gestellten Maximal-Druckniveaus zu Druckstößen im KraftstoffVersorgungssystem bzw. Befüllsystem der Tankstelle bzw. Versorgungsstation führen und dort Schäden hervorrufen.
Aufzuzeigen, wie dies verhindert werden kann ist Aufgabe der vorliegenden Erfindung.

Die Lösung dieser Aufgabe ergibt sich mit den Merkmalen des Anspruchs 1 und besteht darin, dass jedenfalls dann, wenn die Befüll-Leitung der Kraftstoffspeicheranlage des Fahrzeugs an eine Versorgungsstation angeschlossen ist, welche Kraftstoff unter einem den Tank-Grenzdruck überschreitenden Druck bereitstellt, ein in der Befüll-Leitung vorgesehenes Tankabsperrventil rechtzeitig vor Erreichen des Grenzdrucks im Haupt-Tank geschlossen wird und ein Betankungs-Hilfsventil in einer von der Befüllleitung stromauf des Tankabsperrventils abzweigenden und zum für die Aufnahme von Kraftstoff unter höherem Druck als dem besagten Tank-Grenzdruck ausgelegten Hilfsspeicher führenden Hilfsspeicher-Befüllleitung geöffnet wird. Vorteilhafte Weiterbildungen sind Inhalt der Unteransprüche.

Erfindungsgemäß wird durch eine elektronische Steuereinheit der Druckaufbau im Haupt-Tank während eines Befüllvorgangs desselben vorzugsweise mittels eines geeignet platzierten Druckmessfühlers überwacht und dann, wenn mit weiterer Befüllung des Haupt-Tanks die Gefahr des Überschreitens von dessen Grenzdruck besteht, eine weitere Befüllung durch Schließen eines geeigneten Ventils, hier Tankabsperrventil genannt, verhindert. Im wesentlichen gleichzeitig mit dem Schließen dieses Tankabsperrventils, sicherheitshalber jedoch eine geringe Zeit zuvor wird ein Hilfsspeicher mit der Befüllleitung stromauf dieses Tankabsperrventils verbunden, so dass nun der von der Tankstelle/Versorgungsstation gelieferte Kraftstoff in den Hilfsspeicher gelangt. Dieser Hilfsspeicher ist darauf ausgelegt, dem maximalen Druckniveau, welches von Tankstellen für (vorliegend) gasförmigen Wasserstoff üblicherweise angeboten wird, standzuhalten. Weiter oben ist als beispielhafter bzw. derzeitiger Zahlenwert für dieses maximale Druckniveau ein Wert in der Größenordnung von 600bar bis 700 bar genannt. In dem Hilfsspeicher, welcher vorzugsweise ein relativ geringes Speichervolumen besitzt, baut sich dann relativ kurzfristig, aber immerhin derart langsam, dass das Befüllsystem der Tankstelle in üblicher Weise hierauf reagieren kann, ein Druck auf, der sich dem von der Tankstelle angebotenen Maximaldruck (von 600 - 700 bar) nähert. In der Tankstelle bzw. von deren Befüllsystem elektronisch gesteuert wird daraufhin analog wie beim Befüllen anderer Drucktanks anderer Kraftfahrzeuge, die für die Aufnahme von gasförmigem Wasserstoff unter einem derart hohen Druckniveau ausgelegt sind, ein sanftes Abschalten des Befüllvorgangs eingeleitet.

Zwar ist es für die Durchführung des erfindungsgemäßen Verfahrens erforderlich, dass das Kraftfahrzeug zusätzlich zum Haupt-Tank, bei welchem es sich vorzugsweise um einen Kryodrucktank (vgl. hierzu die eingangs genannte DE 10 2008 060 127 A1) handelt, mit einem Hilfsspeicher ausgerüstet ist, der dem maximal an (hier:) Wasserstoff-Tankstellen angebotenen Druckniveau standhalten kann, jedoch kann ein solcher Hilfsspeicher relativ klein gehalten werden. Da wie vorhergehend erläutert lediglich ein geringes Speichervolumen benötigt wird erhöht ein solcher kleiner Hilfsspeicher das Gewicht eines hiermit ausgerüsteten Kraftfahrzeugs nur in geringem Ausmaß. Vorteilhafterweise kann ein solcher Hilfsspeicher weitere Funktionen übernehmen, so beispielsweise - wie aus der eingangs genannten DE 100 21 681 C2 grundsätzlich bekannt - eine gegebenenfalls auch bei einem Kryodrucktank zur Vermeidung eines unzulässig hohen Druckanstiegs im Tank abzublasende bzw. abzuführende Teilmenge von Wasserstoff (allg. Kraftstoff) zur späteren Verwendung bzw. Verbrennung durch einen Verbraucher zwischenspeichern.

Eine weitere vorteilhafte zusätzliche Funktion des Hilfsspeichers kann darin bestehen, den Betrieb bzw. Weiterbetrieb eines Verbrauchers des im wesentlichen im Haupt-Tank gespeicherten Kraftstoffs auch bei einem Befüllvorgang dieses Haupt-Tanks zu ermöglichen. Aus verschiedenen Gründen kann es nämlich empfehlenswert sein, eine sog. Versorgungsleitung, über welche der im Kraftfahrzeug vorgesehene Verbraucher - vorzugsweise handelt es sich hierbei um eine Brennstoffzelle oder eine Brennkraftmaschine - aus dem Haupt-Tank mit Kraftstoff versorgt wird, während eines Befüllvorgangs des Haupt-Tanks abzusperren. Nun wird vorgeschlagen, den Hilfsspeicher solchermaßen stromab eines in einer zu einem Verbraucher führenden Versorgungsleitung vorgesehenen Sperrventils, welches bei einem Befüllvorgang des Haupt-Tanks geschlossen ist, solchermaßen an die besagte Versorgungsleitung anzuschließen, bspw. durch Öffnen eines entsprechenden Ventils, dass der Verbraucher auch bei geschlossenem Sperrventil aus dem Hilfsspeicher betreibbar ist. Dies ist insbesondere dann vorteilhaft, wenn es sich bei dem Verbraucher um ein Brennstoffzellensystem handelt, da das Herunterfahren und Wieder-Hochfahren desselben nur für einen Befüllvorgang des Haupt-Tanks zu aufwändig wäre.
Weiterhin wird vorgeschlagen, durch geeignete Entnahme von Kraftstoff aus dem Hilfsspeicher sicherzustellen, dass dieser rechtzeitig vor dem Abschluss eines Befüllvorgangs des Haupt-Tanks zumindest annähernd geleert ist. Dies ist vorteilhaft, da hiermit der Hilfsspeicher als zusätzliches Speichervolumen für Kraftstoff mit maximal möglicher Kapazität genutzt werden kann. Zwar kann dann zunächst kein weiterer ggf. aus dem Haupt-Tank zur Verhinderung einer unzulässigen Drucksteigerung aus dem Haupt-Tank abgeblasener Kraftstoff/Wasserstoff in den Hilfsspeicher eingeleitet werden, jedoch ist diese Konsequenz einfach dadurch abschwächbar, dass anschließend an einen Befüllvorgang des Haupt-Tanks der Verbraucher zunächst alleine aus dem Hilfsspeicher versorgt wird, und zwar vorzugsweise solange, bis der Druck im Hilfsspeicher zumindest auf das Grenzdruck-Niveau des Haupt-Tanks abgefallen ist.

In der beigefügten Prinzipskizze ist eine Kraftstoffspeicheranlage eines Kraftfahrzeugs, an der das erfindungsgemäße Verfahren praktizierbar ist, schematisch dargestellt. Dabei ist mit der Bezugsziffer 1 ein als Kryodrucktank ausgebildeter Haupt-Tank zur Speicherung von Wasserstoff im tiefkalten überkritischen Zustand unter Druckwerten bis zu 300 bar (= Grenzdruck des Haupt-Tanks) gekennzeichnet. Über eine Befüllleitung 2, in der ein Tankabsperrventil 3 vorgesehen ist, ist dieser Haupt-Tank 1 an einer Tankstelle (Versorgungsstation) mit kryogenem Wasserstoff in überkritischem Zustand oder auch mit gasförmigem Wasserstoff unter hohem Druck befüllbar. Vom Haupt-Tank 1 führt eine Versorgungsleitung 4, in der ein Druckregelventil 5 vorgesehen ist, zu einem Verbraucher 6, insbesondere in Form einer Brennstoffzelle. Das Druckregelventil 5 senkt den im Haupt-Tank 1 herrschenden Wasserstoff-Druck auf ein für den Verbraucher 6 verträgliches Niveau. Nahe des Haupt-Tanks 1 ist in der Versorgungsleitung 4 ein Sperrventil 7 vorgesehen, welches geschlossen wird, wenn der Haupt-Tank 1 an einer Tankstelle befüllt wird.

Zusätzlich zum Haupt-Tank 1 ist ein Hilfsspeicher 8 zur Speicheung von Kraftstoff bzw. Wasserstoff vorgesehen, der über eine Speiseleitung 9 mit der Versorgungsleitung 4 stromab des Sperrventils 7, d.h. auf der dem Verbraucher 6 zugewandten Seite desselben und stromauf des Druckregelventils 5 verbunden ist. Zusätzlich ist der Hilfsspeicher 8 über eine Hilfsspeicher-Befüllleitung 11 mit der Befüllleitung 2 verbindbar, indem ein in der Hilfsspeicher-Befüllleitung 11 vorgesehenes sog. Betankungs-Hilfsventil 10 geöffnet wird. Der technische Hintergrund hierfür, nämlich die Verhinderung eines sich während eines Befüllvorgangs des Haupt-Tanks 1 mit einem Schließen des Tankabsperrventils 3 stromauf des Tankabsperrventils 3 ergebenden und in die Tankstelle bzw. in deren Befüllsystem gelangenden Druckstoßes wurde weiter oben erläutert. Demnach wird beim Befüllen des Haupt-Tanks 1 an einer Tankstelle, die ausschließlich gasförmigen Wasserstoff unter einem Druckniveau von bspw. 700 bar bereitstellt, mittels eines nicht gezeigten Druckmessfühlers der Druck im Haupt-Tank 1 laufend überwacht und beispielsweise dann, wenn dieser 285 bar beträgt und somit geringfügig unterhalb des genannten Tank-Grenzdrucks liegt, das zunächst geschlossene Betankungs-Hilfsventil 10 geöffnet. Sobald mit weiterem Zuströmen von Wasserstoff aus der Tankstelle der Druck im Haupt-Tank 1 auf 295 bar gestiegen ist, wird das Tankabsperrventil 3 geschlossen, wonach noch solange seitens der Tankstelle Wasserstoff in die Befüllleitung 2 und die Hilfsspeicher-Befüllleitung 11 und über das offene Betankungs-Hilfsventil 10 in den Hilfsspeicher 8 gefördert wird, bis in diesem der von der Tankstelle bereitgestellte Maximaldruck von bspw. 700 bar herrscht.

In der Speiseleitung 9 zwischen dem Hilfsspeicher 8 und der Versorgungsleitung 4 ist ein Ventil 12 vorgesehen, welches im geöffneten Zustand ermöglicht, dass der Verbraucher 6 bei geschlossenem Sperrventil 7 mit Kraftstoff aus dem Hilfsspeicher 8 versorgt wird und somit betrieben werden kann, wenn ein weiteres in der Versorgungsleitung 4 hier stromauf des Druckregelventils 5 und stromab der Einmündung der Speiseleitung 9 vorgesehenes Ventil 13, auf dessen Funktion noch eingegangen wird, geöffnet ist. Vorzugsweise wird nach einem vollständigen Befüllen des Haupt-Tanks 1 das Sperrventil 7 noch solange geschlossen gehalten und somit der Verbraucher 6 aus dem Hilfsspeicher 8 versorgt, bis der Druck im Hilfsspeicher 8 zumindest auf den Grenzdruck des Haupt-Tanks 1 abgefallen ist, womit gewährleistet ist, dass der Hilfsspeicher 8 bei einem späteren Befüll-Vorgang des Haupt-Tanks 1 seine wesentliche weiter oben geschilderte Funktion, nämlich einen in die Tankstelle gelangenden Druckstoß zu verhindern, erfüllen kann.

Wenn hingegen bei nicht betriebenen Verbraucher 6 (und insbesondere bei abgestelltem Kraftfahrzeug) das Ventil 13 (sowie selbstverständlich auch die Ventile 10 und 3) geschlossen sind und die Ventile 7 und 12 geöffnet werden oder sind, so kann ein insbesondere aus einem Wärmeeintrag in den Haupt-Tank 1 resultierender Druckaufbau im Haupt-Tank 1, durch den dessen Grenzdruck überschritten werden könnte, in den Hilfsspeicher 8 hinein ohne Verlust von gespeichertem Kraftstoff abgebaut werden, indem aus dem Haupt-Tank 1 sicherheitshalber über das dann geöffnete Sperrventil 7 abgeführter Kraftstoff durch die Speiseleitung 9 in den Hilfsspeicher 8 gelangt und dort solange zwischengespeichert wird, bis der Verbraucher 6 aus dem Hilfsspeicher 8 mit Kraftstoff versorgt wird.

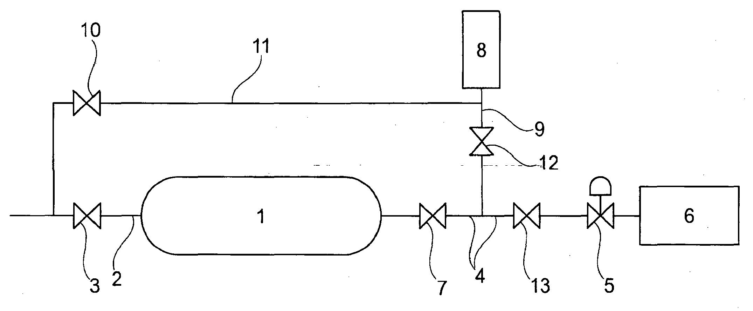

## Patentansprüche

1. Verfahren zum Befüllen einer Kraftstoffspeicheranlage eines Kraftfahrzeugs mit unter höherem Druck stehenden Kraftstoff, wobei die Kraftstoffspeicheranlage einen über eine Haupt-Befüllleitung (2) bis zum Erreichen eines Grenzdrucks befüllbaren Haupt-Tank (1) und einen Hilfsspeicher (8) aufweist, wobei dann, wenn die Befüll-Leitung an eine Versorgungsstation angeschlossen ist, welche Kraftstoff unter einem den Tank-Grenzdruck überschreitenden Druck bereitstellt, ein in der Befüll-Leitung vorgesehenes Tankabsperrventil (3) rechtzeitig vor Erreichen des Grenzdrucks im Haupt-Tank (1) geschlossen wird und ein Betankungs-Hilfsventil (10) in einer von der Haupt-Befüllleitung (2) stromauf des Tankabsperrventils (3) abzweigenden und zum Hilfsspeicher (8) führenden Hilfsspeicher-Befüllleitung geöffnet wird,
**dadurch gekennzeichnet, dass** der Hilfsspeicher für die Aufnahme von Kraftstoff unter höherem Druck als dem besagten Tank-Grenzdruck ausgelegt ist.

2. Verfahren nach Anspruch 1, wobei der Hilfsspeicher (8) stromab eines in einer zu einem Verbraucher führenden Versorgungsleitung (4) vorgesehenen Sperrventils (7), welches bei einem Befüllvorgang des Haupt-Tanks (1) geschlossen ist, solchermaßen an die besagte Versorgungsleitung (4) angeschlossen wird, dass der Verbraucher (6) bei geschlossenem Sperrventil (7) aus dem Hilfsspeicher (8) betreibbar ist.

3. Verfahren nach Anspruch 1 oder 2, wobei durch geeignete Entnahme von Kraftstoff aus dem Hilfsspeicher (8) sichergestellt wird, dass dieser rechtzeitig vor dem Abschluss eines Befüllvorgangs des Haupt-Tanks (1) zumindest annähernd geleert ist.

## Claims

1. A method for filling a fuel storage system of a motor vehicle with fuel under a relatively high pressure, wherein the fuel storage system has a main tank (1) which is fillable via a main filling line (2) until a limiting pressure has been reached, and an auxiliary storage means (8), wherein when the filling line is connected to a supply station which supplies fuel under a pressure which exceeds the tank limiting pressure, a tank shutoff valve (3), provided in the filling line, is closed in good time before the limiting pressure is reached in the main tank (1) and an auxiliary tank valve (10) in an auxiliary storage means filling line, which branches off from the main filling line (2) upstream of the tank shutoff valve (3) and leads to the auxiliary storage means (8) is opened, **characterised in that** the auxiliary storage means is configured to receive fuel under a higher pressure than the mentioned tank limiting pressure.

2. A method according to claim 1, wherein the auxiliary storage means (8) is connected downstream of a shutoff valve (7) which is provided in a supply line (4) leading to a consumer and is closed during a filling procedure of the main tank (1), to said supply line (4), such that the consumer (6) is operable from the auxiliary storage means (8) when the shutoff valve (7) is closed.

3. A method according to claim 1 or claim 2, wherein an appropriate removal of fuel from the auxiliary storage means (8) ensures that said auxiliary storage means is at least approximately emptied in good time before the end of a filling procedure of the main tank (1).

## Revendications

1. Procédé de remplissage d'une installation de stockage de carburant d'un véhicule avec du carburant sous haute pression, l'installation de stockage de carburant comprenant un réservoir principal (1) pouvant être rempli par l'intermédiaire d'une conduite de remplissage principale (2) jusqu'à avoir atteint une pression limite, et un élément de stockage auxiliaire (8), selon lequel, lorsque la conduite de remplissage est connectée à une station d'alimentation qui fournit du carburant sous une pression dépassant la pression limite du réservoir, une soupape de blocage du réservoir (3) montée dans la conduite de remplissage est fermée avant d'avoir atteint la pression limite dans le réservoir principal (1) et, une soupape auxiliaire de remplissage (10) située dans une conduite de remplissage de l'élément de stockage auxiliaire branchée sur la conduite de remplissage principale (2) en amont de la soupape de blocage du réservoir (3) et conduisant à l'élément de stockage auxiliaire (8) est ouverte,
**caractérisé en ce que**
l'élément de stockage auxiliaire est conçu pour pouvoir recevoir du carburant sous une pression supérieure à la pression limite du réservoir susmentionnée.

2. Procédé conforme à la revendication 1,
selon lequel
l'élément de stockage auxiliaire (8) est branché en aval d'une soupape de blocage (7) prévue dans une conduite d'alimentation (4) conduisant à un consommateur qui est fermée lors d'un processus de remplissage du réservoir principal (1), sur cette conduite d'alimentation (4) de sorte que le consommateur (6) puisse être actionné à partir de l'élément de stockage auxiliaire (8) lorsque la soupape de blocage (7) est fermée.

3. Procédé conforme à la revendication 1 ou 2,
**caractérisé en ce qu'**
un prélèvement adapté de carburant dans l'élément de stockage auxiliaire (8) permet de garantir que celui-ci soit au moins approximativement vidé avant l'achèvement d'un processus de remplissage du réservoir principal (1).
